# EUROPÄISCHE PATENTSCHRIFT

(11) **EP 2 179 154 B1**
(45) Veröffentlichungstag und Bekanntmachung des Hinweises auf die Patenterteilung: **09.12.2015**
(21) Anmeldenummer: 08784519.4
(22) Anmeldetag: 18.06.2008
(51) Int. Cl.: F02B 37/18, F02B 29/04, F02M 25/07, F02B 33/44, F02B 37/16, F02B 39/04, F02B 37/04

(54) **BRENNKRAFTMASCHINE**
INTERNAL COMBUSTION ENGINE
MOTEUR À COMBUSTION INTERNE

(30) Priorität: 17.07.2007 DE 102007033175
(43) Veröffentlichungstag der Anmeldung: 28.04.2010
(73) Patentinhaber: Volkswagen Aktiengesellschaft, 38440 Wolfsburg (DE)
(72) Erfinder: MICHELS, Karsten, 39112 Magdeburg (DE); KÜHLMEYER, Jens, 38518 Gifhorn (DE); HAGELSTEIN, Dirk, 38110 Braunschweig (DE); KLOFT, Manfred, 38154 Königslutter (DE)
(86) Internationale Anmeldenummer: PCT/EP2008/004880
(87) Internationale Veröffentlichungsnummer: WO 2009/010145

(56) Entgegenhaltungen:
- EP-A- 1 754 870
- WO-A-2006/066739
- DE-A1- 19 928 523

## Beschreibung

Die Erfindung betrifft eine Brennkraftmaschine, insbesondere Ottomotor, mit einem Abgasturbolader und einem mechanischen Lader, wobei im Luftkanal für Verbrennungsluft ein Verdichter des Abgasturboladers stromauf des mechanischen Laders angeordnet ist, gemäß dem Oberbegriff des Anspruchs 1.

Die kombinierte Aufladung eines Ottomotors durch einen mechanischen Lader (ML) und einen Abgasturbolader (ATL) ist beispielsweise aus der US 4 903 488 bekannt und bietet die Möglichkeit das Kennfeld erheblich zu erweitern. Dabei kann durch das spontane Ansprechverhalten des mechanischen Laders im unteren Drehzahlbereich das sog. Turboloch vermieden und somit der ATL für den oberen Drehzahl- und Nennleistungsbereich ausgelegt werden. Wegen des breiten nutzbaren Drehmomentplateaus können lange Getriebeübersetzungen verwendet werden, was als Downspeeding bezeichnet wird, die zusammen mit der Lastpunktverschiebung durch sogen. Downsizing erhebliche Verbrauchseinsparungen gegenüber konventionellen Motoren ermöglichen. Mit dieser Technik sind unter Serienrandbedingungen noch moderate Steigerungen des maximalen effektiven Mitteldruckes (von 22 bar auf ca. 24 bar) und der spezifischen Leistung (von 90 kW/l auf ca. 100 kW/l) möglich, um weiteres Verbrauchspotenzial durch noch mehr Downsizing zu erschließen. Um wirklich nennenswerte Verbesserungen zu erzielen, wäre jedoch ein Technologiesprung erforderlich.

Einer wesentlichen Steigerung von effektivem Mitteldruck sowie spezifischer Leistung und damit dem Downsizinggrad stehen jedoch folgende Nachteile der zuvor beschriebenen Brennkraftmaschine entgegen. Aufgrund des Packages sind sehr lange Luftwege vor und nach ATL-Verdichter erforderlich. Da der mechanische Lader das erste Aufladeaggregat ist, muss erst ein großes Volumen einschließlich Luft-Ladeluftkühler befüllt werden, bevor der Saugrohrdruck ansteigt und Drehmoment aufgebaut werden kann. Dies verringert das mögliche Potenzial hinsichtlich des Ansprechverhaltens, so dass sich bei weiterer Hochaufladung eine spürbare Ansprechverzögerung ergeben würde. Die sich bei einer langen Ansaugstrecke ergebenden hohen Ansaugdruckverluste vor dem ATL-Verdichter wirken sich bei Hochaufladung besonders negativ auf die Leistungsfähigkeit des ATL aus, was den möglichen Betriebsbereich des ATL und damit des Motors verringert. Der Betriebspunkt im Verdichterkennfeld liegt im Low-End-Torque-Bereich sehr nah an der Verdichterpumpgrenze, was eine weitere wesentliche Drehmomentsteigerung im unteren Drehzahlbereich verhindert. Die Begrenzung durch die Pumpgrenze verhindert auch, dass ein wesentlich größerer Verdichter verwendet werden kann, der für eine weitere deutliche Anhebung der Nennleistung erforderlich wäre. Jede weitere Leistungssteigerung erfordert zusätzliche Bauteilschutzmaßnahmen, wie beispielsweise Gemischanfettung, die einem geringeren Kraftstoffverbrauch entgegenwirken und den eigentlichen Vorteil des Downsizing wieder zunichte machen. Jede weitere Drehmomentsteigerung erfordert ein höheres Druckverhältnis und eine längere Einschaltdauer des mechanischen Laders, was ebenfalls den erzielbaren Verbrauchsvorteil mindert. Die abzuführende Wärmemenge bzw. Kühlleistung steigt überproportional an, was große wirksame Kühlerflächen erfordert.

Aus der DE 199 28 523 A1 ist eine Brennkraftmaschine mit ATL und Kompressor bekannt, wobei der ATL-Verdichter in Strömungsrichtung vor dem mechanischen Lader angeordnet ist.

Im Dokument WO 2006/066739 A1 wird eine Brennkraftmaschine beschrieben, welche einen Abgasturbolader und einen stromabwärts des Verdichters des Abgasturboladers angeordneten mechanischen Lader aufweist. Stromab des Verdichters sowie stromab des mechanischen Laders ist jeweils ein Ladeluftkühler angeordnet. Der Verdichter des Abgasturboladers saugt über einen Luftfilter Frischluft an und verdichtet diese auf einen für den normalen Fahrbetrieb vorgesehenen Ladedruck. Bei erhöhter Leistungsanforderung wird die vorverdichtete Luft über den mechanischen Lader geleitet und nachverdichtet, so dass der erhöhten Kraftstoffeinspritzung entsprechend eine größere Ladeluftmenge zugeführt wird.

Im Dokument EP 1 754 870 A2 wird eine Brennkraftmaschine mit einer zweistufigen Aufladung mittels eines ersten und eines zweiten Abgasturboladers beschrieben. Pro Zylinder existieren zwei Auslassventile, wobei eines der Auslassventile ausschließlich mit einer Turbine eines der Abgasturbolader fluidisch verbunden ist.

Der Erfindung liegt die Aufgabe zugrunde, bei einer Brennkraftmaschine ein extremes Downsizing durch Hochaufladung mit dem Ziel der Kraftstoffverbrauchsenkung möglich zu machen.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass der Verdichter des Abgasturboladers derart im Luftkanal für Verbrennungsluft angeordnet ist, dass der Verdichter des Abgasturboladers direkt aus einem Luftfilter Verbrennungsluft ansaugt, wobei stromab des Verdichter des Abgasturboladers und stromauf des mechanischen Laders ein erster Ladeluftkühler sowie stromab des mechanischen Laders ein zweiter Ladeluftkühler angeordnet ist, wobei der erste Ladeluftkühler, der zweite Ladeluftkühler, der mechanische Lader und das Saugrohr in einem einzigen Ladeluftkühlmodul angeordnet sind, wobei zur Zuführung von Kraftstoff eine Kraftstoffdirekteinspritzung in Brennräume der Brennkraftmaschine vorgesehen ist.

Dies hat den Vorteil, dass die erfindungsgemäße Kombination der Merkmale in der Summe einen Synergieeffekt ergibt, der folgende separate Vorteile in Kombination ausnutzt wodurch sich ein unerwarteter Technologiesprung ergibt: Der ATL-Verdichter saugt unverdichtete Luft aus der Umgebung an, wodurch der Verdichtervolumenstrom bei gleichem Massenstrom ansteigt und sich die kritischen Betriebspunkte im Low-End-Torque-Bereich von der Pumpgrenze entfernen. Der Verdichterwirkungsgrad steigt, was sowohl das Ansprech- und Beschleunigungsverhalten des ATL verbessert, als auch das erreichbare Low-End-Torque erhöht. Außerdem können wegen der Entschärfung des Pumpgrenzproblems größere Verdichter verwendet werden, was die Voraussetzung für höhere spezifische Leistungen ist. Der mechanische Lader als Volumenförderer kann aufgrund der durch den ATL vorverdichteten Luft höchstmögliche Massenströme fördern. Auf diese Weise können mit sehr gutem Ansprechverhalten extrem hohe Zylinderfüllungen realisiert werden. Für gleiches Motordrehmoment sinkt die Antriebsleistung für den mechanischen Lader, was einem Gewinn an Drehmoment bzw. bei Beibehaltung des Drehmomentes einen Verbrauchsvorteil bedeutet. Geringe Ansaugdruckverluste vor dem ATL-Verdichter ergeben sich daraus, dass der ATL-Verdichter direkt aus dem Luftfilter ansaugt und dadurch kurze Luftwege vor dem ATL-Verdichter vorhanden sind. Durch eine Rückkühlung der verdichteten Luft mit Hilfe einer Zwischenkühlung wird die thermische Belastung des mechanischen Laders minimiert. Die insgesamt abzuführende Wärmemenge wird gegenüber einer Lösung ohne Zwischenkühlung verringert, so dass die benötigte Kühlerfläche auch bei einer Leistungssteigerung nicht zu stark ansteigt. Ein kurzer Luftweg vom Zwischenkühler in den mechanisch angetriebenen Kompressor und von dort aus in das Saugrohr wird durch das Integralbauteil in Form des Ladeluftkühlmoduls erreicht, das ersten Ladeluftkühler, mechanischen Lader, zweiten Ladeluftkühler und Saugrohr in einem Modul zusammenfasst. Durch die Direkteinspritzung können Innenkühlungseffekte durch die Verdampfung des Kraftstoffes ausgenutzt und somit die Klopfneigung des Motors reduziert werden. Auf diese Weise können selbst bei hoher Aufladung noch relativ hohe Verdichtungsverhältnisse realisiert werden, was eine notwendige Voraussetzung für einen geringen Teillastverbrauch ist. Es können effektive Mitteldrücke im Bereich 24-28 bar und sogar effektive Mitteldrücke von mehr als 30 bar bei spezifischen Drehmomenten von ca. 235 Nm/l, sowie spezifische Leistungen im Bereich 95-125 kW/l und sogar von über 130 kW/l erzielt werden.

Um ein Volumen zwischen dem mechanischen Lader und einem Einlasskanal von bevorzugt kleiner als drei Liter (3.000 ccm) zu ermöglichen, sind erster und/oder zweiter Ladeluftkühler als wassergekühlter Ladeluftkühler ausgebildet.

Zweckmäßigerweise sind der mechanische Lader sowie das Saugrohr derart angeordnet und ausgebildet, dass ein Volumen im Luftkanal für Verbrennungsluft zwischen dem mechanischen Lader und einem Einlasskanal kleiner als drei Liter ist.

Je nach Einbausituation bzw. Bauraumverhältnissen der Brennkraftmaschine kann der aus dem Luftfilterkasten ansaugende Abgasturbolader auf der dem Ladeluftkühlmodul gegenüberliegenden Seite der Brennkraftmaschine angeordnet sind oder auf der gleichen Seite. Im Falle einer gegenüberliegenden Anordnung ist der Abgasturbolader bevorzugt in einer geodätisch oberen bzw. hohen Lage dem Zylinderkopf nahe angeordnet, wodurch sich eine kurze Verbindung für die den Abgasturbolader verlassende Ladeluft bezüglich dem Eintritt in den ersten Ladeluftkühler ergibt.

Bei Anordnung von Ladeluftkühlmodul und Abgasturbolader auf einer Seite kann die Strömungsverbindung zwischen Austritt des Verdichters und Eintritt in den ersten Ladeluftkühler weiter reduziert werden.

Wenn im Rahmen dieser Erfindung davon gesprochen wird, dass der Abgasturbolader seine Verbrennungsluft direkt aus einem Luftfilter ansaugt, so bedeutet dies, dass die Strömungsverbindung zwischen Luftfilter und Eintritt des Verdichters des Abgasturboladers möglichst kurz bemessen ist. Eine Verlängerung dieser Saugstrecke bedeutet Strömungsverluste und ein verschlechtertes Ansprechverhalten.

Die optional zusätzlich vorgesehene externe Abgasrückführung (AGR) bietet unter Beibehaltung eines Lambda-1-Konzeptes, d. h. eines Betriebs der Brennkraftmaschine weitestgehend mit einem stöchiometrischen Luft-Kraftstoffverhältnis, und mit geregeltem 3-Wege-Katalysator in der Teillast das Potenzial, durch die Entdrosselung des Motors Ladungswechselarbeit zu sparen und damit den Kraftstoffverbrauch zu senken. Bei hohen Lasten im Aufladebetrieb lassen sich durch eine gekühlte externe AGR aufgrund der höheren Ladungsmasse im Zylinder die Abgastemperaturen senken und damit der Gemischanfettungsbedarf zum Bauteilschutz reduzieren.

Die Erfindung wird im folgenden anhand der Zeichnung näher erläutert. Diese zeigt in
- Fig. 1: eine bevorzugte Ausführungsform einer erfindungsgemäßen Brennkraftmaschine in perspektivischer Ansicht,
- Fig. 2: ein schematisches Schaltbild einer alternativen bevorzugten Ausführungsform einer erfindungsgemäßen Brennkraftmaschine mit Niederdruck-AGR und
- Fig. 3: ein schematisches Schaltbild einer alternativen bevorzugten Ausführungsform einer erfindungsgemäßen Brennkraftmaschine mit Hochdruck-AGR.

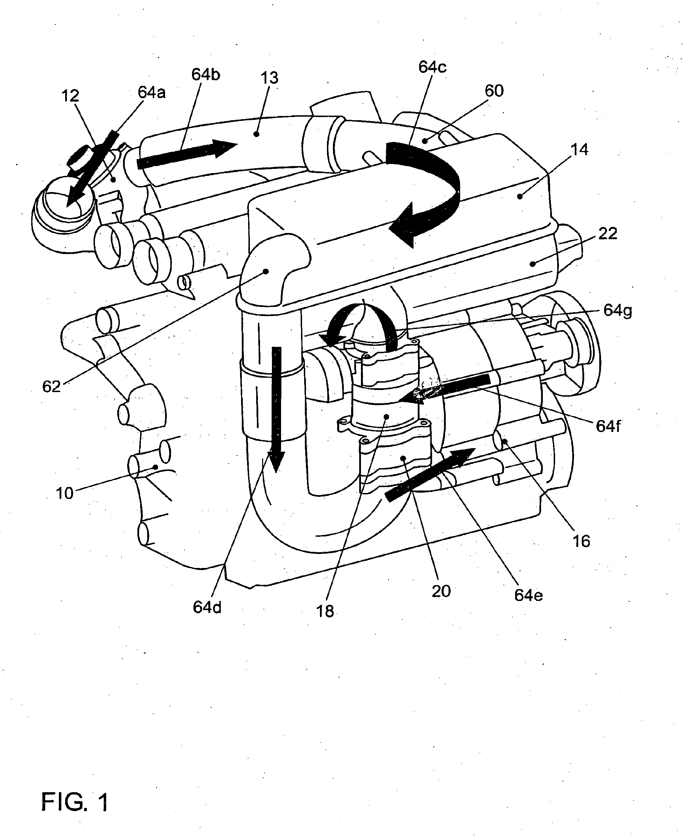

Die in Fig. 1 dargestellte, erste bevorzugte Ausführungsform einer erfindungsgemäßen Brennkraftmaschine umfasst einen Motorblock 10, einen Verdichter 12 eines Abgasturboladers, eine Ladeluftleitung 13, einen ersten Ladeluftkühler 14, einen mechanischen Lader 16, einen Überbrückungskanal 18 für den mechanischen Lader 16 mit darin angeordneter Regelklappe 20 und einen zweiten Ladeluftkühler 22. Der erste Ladeluftkühler 14, der mechanische Lader 16, der Überbrückungskanal 18, der zweite Ladeluftkühler 22 sowie das in Fig. 1 nicht sichtbare Saugrohr sind zu einem Ladeluftkühlmodul zusammengefasst, wodurch sich besonders kurze Strecken für den Luftkanal für Verbrennungsluft zwischen diesen Bauteilen ergeben.

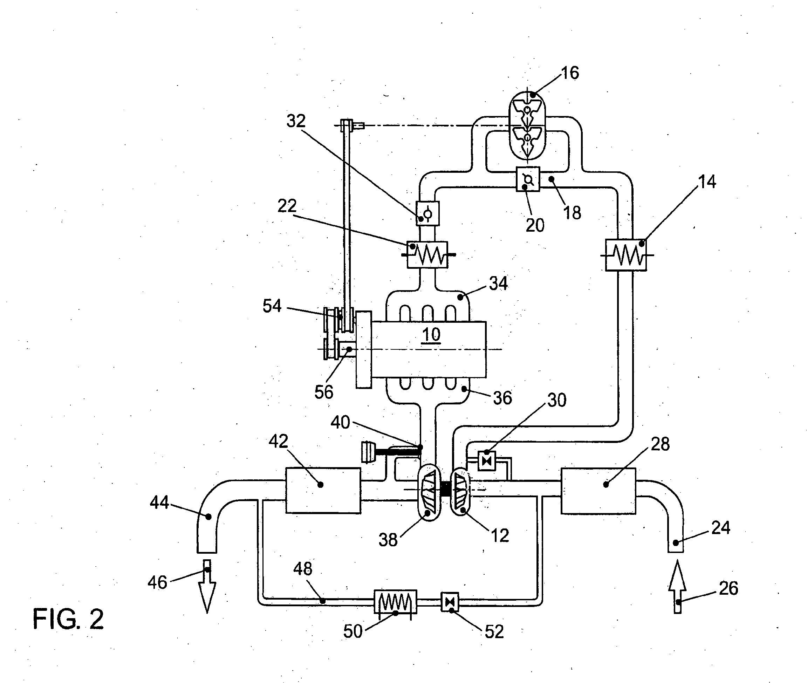

Ein schematisches Schaltbild einer derartigen Brennkraftmaschine mit einer externen Abgasrückführüng (AGR) ist in Fig. 2 dargestellt. Funktionsgleiche Teile sind mit gleichen Bezugszeichen bezeichnet, wie in Fig. 1, so dass zu deren Erläuterung auf die obige Beschreibung der Fig. 1 verwiesen wird. Die Brennkraftmaschine umfasst im Verbrennungsluftkanal zusätzlich zu den bereits aus Fig. 1 ersichtliche Bauteilen einen Einlass 24 für Verbrennungsluft 26, einen Luftfilter 28, ein den Verdichter 12 umgehendes Schubumluftventil 30, eine Drosselklappe 32 und das Saugrohr 34.

Im Abgaskanal umfasst die Brennkraftmaschine einen Abgaskrümmer 36, eine Turbine 38 des Abgasturboladers, ein diese Turbine 38 überbrückendes Wastegate 40, einen Katalysator 42, einen Auslass 44 für Abgas 46 und eine Niederdruck-AGR-Leitung 48 mit AGR-Kühler 50 und AGR-Ventil 52, die von dem Abgaskanal stromab des Katalysators 42 abzweigt und stromauf des Verdichters 12 in den Verbrennungsluftkanal einmündet.

Der mechanische Lader 16 ist über eine Magnetkupplung 54 mit einer Kurbelwelle 56 der Brennkraftmaschine verbunden.

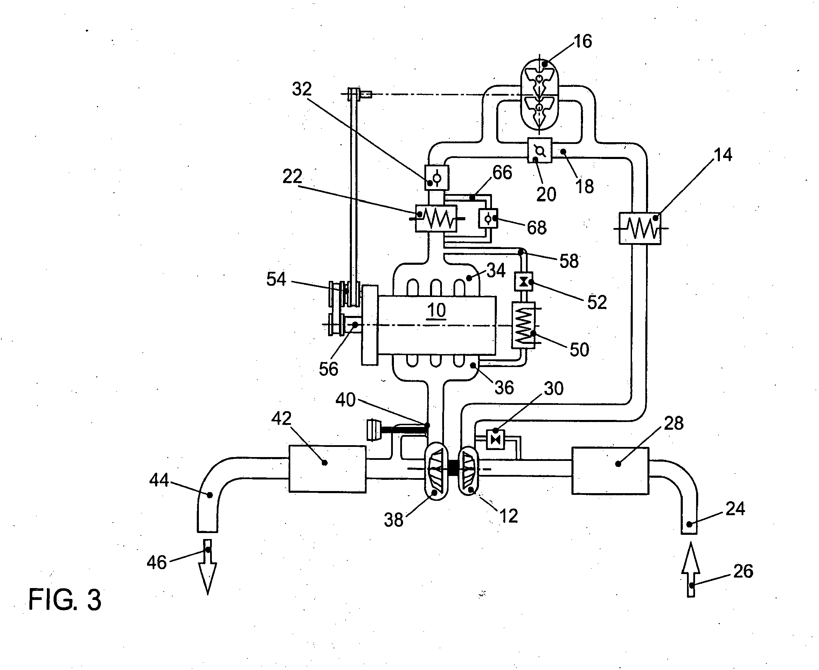

Bei der alternativen Ausführungsform gemäß Fig. 3 sind funktionsgleiche Teile mit gleichen Bezugszeichen bezeichnet, wie in Fig. 1 und 2, so dass zu deren Erläuterung auf die obige Beschreibung der Fig. 1 und 2 verwiesen wird. Statt der Niederdruck-AGR-Leitung wie bei der Ausführungsform gemäß Fig. 2 ist eine Hochdruck-AGR-Leitung 58 vorgesehen. Diese Hochdruck-AGR-Leitung 58 zweigt von dem Abgaskrümmer 36 ab und mündet in das Saugrohr 34 ein.

Die erfindungsgemäße Kombination der Merkmale (a) mechanischer Lader 16 stromab des Verdichters 12, (b) extrem kurze Luftwege vor dem Verdichter 12 durch Anordnen des Verdichters 12 unmittelbar stromab des Luftfilters 28, (c) Rückkühlung der verdichteten Luft 26 mittels Zwischenkühlung am ersten Ladeluftkühler 14, (d) kurzer Luftweg vom ersten Ladeluftkühler 14 zum mechanischen Lader bzw. mechanisch angetriebenen Kompressor 16 und vom mechanischen Lader 16 zum Saugrohr 34 durch Integration von erstem Ladeluftkühler 14, mechanischem Lader 16, zweitem Ladeluftkühler 22 und Saugrohr 34 in ein einziges Ladeluftkühlmodul, (e) Direkteinspritzung sowie (f) optional AGR erzielt in überraschender Weise eine Ausweitung des Kennfeldbereiches, einen höheren Downsizinggrad sowie eine stärkere Kraftstoffverbrauchsreduktion. In überraschender Weise lassen sich effektive Mitteldrücke von über 30 bar und spezifische Leistungen über 130 kW/l erzielen, ohne die bei herkömmlichen Brennkraftmaschinen auftretenden, eingangs erwähnten Einschränkungen.

In Fig. 1 ist mit Pfeilen 64a bis 64g ein Strömungsweg der Verbrennungsluft veranschaulicht, wobei die Regelklappe 20 geschlossen ist, so dass die Verbrennungsluft über den mechanischen Lader 16 entlang aller Pfeile 64a bis 64g strömt. Bei geöffneter Regelklappe 20 wird der Kompressor 16 (Pfeile 64e und 64f) umgangen. Wie unmittelbar ersichtlich, sind die beiden Ladeluftkühler 14 und 22 zwar unmittelbar nebeneinander angeordnet, es existiert jedoch keine direkte, strömungsleitende Verbindung von einem Ladeluftkühler in den anderen, sondern lediglich eine Verbindung entweder über den Überbrückungskanal 18 oder den mechanischen Lader 16. Die beiden Ladeluftkühler 14 und 22 sind als wassergekühlte Ladeluftkühler ausgebildet und haben einen gemeinsamen Wasserkühlungskreislauf. Dieser Wasserkühlungskreislauf ist ebenfalls in das Ladeluftkühlmodul integriert.

In allen zuvor beschriebenen Ausführungsformen ist es optional möglich, den zweiten Ladeluftkühler 22 mit einem Bypass 66 zu umgehen, wobei in diesem eine Schaltklappe 68 angeordnet ist. Diese Umgehung des zweiten Ladeluftkühlers 22 erfolgt bevorzugt dann, wenn die Regelklappe 20 geöffnet ist, somit der Kompressor umgangen wird und ein einziger Ladeluftkühler, d. h. der erste Ladeluftkühler 14, für eine ausreichende Kühlung der Ladeluft sorgen kann. Vorteilhafterweise entfallen dann die Strömungs- und Drosselverluste des zweiten Ladeluftkühlers 22.

Die Auslegungsdaten für die Ladeluftkühler sind in bevorzugter Weise wie folgt:

| | Bergfahrt bei 2000 /min | Vₘₐₓ |
|---|---|---|
| Fzg.-Geschwindigkeit [km/h] | 37 | 240 |
| Luftmassenstrom Motor [kg/h] | 250 | 630 |
| Außentemperatur [°C] | 30 | 40 |
| Ansaugtemperatur [°C] | 45 | 45 |
| Ladelufttemp. 1. LLK 14 Eingang [°C] | 120-160 | 145-205 |
| Ladelufttemp. 1. LLK 14 Ausgang [°C] | 35-65 | 100-140 |
| Ladelufttemp. 2. LLK 22 Eingang [°C] | 120-150 | 100-140 |
| Ladelufttemp. 2. LLK 22 Ausgang [°C] | 25-55 | 35-65 |

Durch die Anordnung der Lufteinleitungsstelle 60 in den ersten Ladeluftkühler 14 - erkennbar in Figur 1 an der hinteren Seitenfläche rechts -, sind keine besonderen Maßnahmen an dessen Kühlergitter zur Verbesserung der Gleichverteilung der Ladeluft erforderlich. Auf Grund der diagonal gegenüberliegenden Lage von Lufteinleit- und einer Luftableitungsstelle 60 und 62 für die Ladeluft wird eine gute Gleichverteilung der Ladeluft über dem Kühlernetz erzielt. Die Gleichverteilung der Ladeluft über dem Kühlernetz des zweiten Ladeluftkühler 22 wird durch die Lage der Einlasskanäle erzwungen, da diese abwechselnd entlang der gesamten Kühlgitterbreite die Luft abnehmen und den einzelnen Zylindern der Brennkraftmaschine zuführen.

## Patentansprüche

1. Brennkraftmaschine, mit einem Abgasturbolader und einem mechanischen Lader (16), wobei im Luftkanal für Verbrennungsluft ein Verdichter (12) des Abgasturboladers stromauf des mechanischen Laders (16) und derart im Luftkanal für Verbrennungsluft angeordnet ist, dass der Verdichter (12) des Abgasturboladers direkt aus einem Luftfilter (28) Verbrennungsluft ansaugt, wobei stromab des Verdichters (12) des Abgasturboladers und stromauf des mechanischen Laders (16) ein erster Ladeluftkühler (14) sowie stromab des mechanischen Laders (16) ein zweiter Ladeluftkühler (22) angeordnet ist, **dadurch gekennzeichnet, dass** der erste Ladeluftkühler (14), der zweite Ladeluftkühler (22), der mechanische Lader (16) und ein Saugrohr (34) in einem einzigen Ladeluftkühlmodul angeordnet sind, wobei zur Zuführung von Kraftstoff eine Kraftstoffdirekteinspritzung in Brennräume der Brennkraftmaschine vorgesehen ist.

2. Brennkraftmaschine nach Anspruch 1, **dadurch gekennzeichnet, dass** erster und/oder zweiter Ladeluftkühler (14, 22) als wassergekühlter Ladeluftkühler ausgebildet sind.

3. Brennkraftmaschine nach Anspruch 1 oder 2, **dadurch gekennzeichnet, dass** der mechanische Lader (16) sowie das Saugrohr (34) derart angeordnet und ausgebildet sind, dass ein Volumen im Luftkanal für Verbrennungsluft zwischen dem mechanischen Lader (16) und einem Einlasskanal kleiner als drei Liter ist.

4. Brennkraftmaschine nach einem oder mehreren der vorhergehenden Ansprüche, **dadurch gekennzeichnet, dass** eine externe Abgasrückführung (48; 54) vorgesehen ist.

5. Brennkraftmaschine nach einem oder mehreren der vorhergehenden Ansprüche, **dadurch gekennzeichnet, dass** der Abgasturbolader als Teil des Ladeluftkühlmodules ausgebildet ist.

6. Brennkraftmaschine nach einem oder mehreren der vorhergehenden Ansprüche, **dadurch gekennzeichnet, dass** dem zweiten Ladeluftkühler (22) ein Bypass (66) zugeordnet ist.

7. Brennkraftmaschine nach einem oder mehreren der vorhergehenden Ansprüche, **dadurch gekennzeichnet, dass** die Brennkraftmaschine ein Ottomotor ist.

## Claims

1. Internal combustion engine, having an exhaust-gas turbocharger and a supercharger (16), a compressor (12) of the exhaust-gas turbocharger being arranged in the air duct for combustion air upstream of the supercharger (16) and being arranged in the air duct for combustion air in such a way that the compressor (12) of the exhaust-gas turbocharger sucks in combustion air directly from an air filter (28), a first charge-air cooler (14) being arranged downstream of the compressor (12) of the exhaust-gas turbocharger and upstream of the supercharger (16) and a second charge-air cooler (22) being arranged downstream of the supercharger (16), **characterized in that** the first charge-air cooler (14), the second charge-air cooler (22), the supercharger (16) and an intake manifold (34) are arranged in a single charge-air cooling module, direct fuel injection into combustion chambers of the internal combustion engine being provided for supplying fuel.

2. Internal combustion engine according to Claim 1, **characterized in that** the first and/or second charge-air cooler (14, 22) are/is configured as a water-cooled charge-air cooler.

3. Internal combustion engine according to Claim 1 or 2, **characterized in that** the supercharger (16) and the intake manifold (34) are arranged and configured in such a way that a volume in the air duct for combustion air between the supercharger (16) and an inlet duct is smaller than three litres.

4. Internal combustion engine according to one or more of the preceding claims, **characterized in that** an external exhaust-gas recirculation system (48; 54) is provided.

5. Internal combustion engine according to one or more of the preceding claims, **characterized in that** the exhaust-gas turbocharger is configured as part of the charge-air cooling module.

6. Internal combustion engine according to one or more of the preceding claims, **characterized in that** the second charge-air cooler (22) is assigned a bypass (66).

7. Internal combustion engine according to one or more of the preceding claims, **characterized in that** the internal combustion engine is a petrol engine.

## Revendications

1. Moteur à combustion interne, comprenant un turbocompresseur à gaz d'échappement et un suralimenteur mécanique (16), un compresseur (12) du turbocompresseur à gaz d'échappement étant disposé dans le conduit d'air pour l'air comburant en amont du suralimenteur mécanique (16) et étant disposé dans le conduit d'air pour l'air comburant de telle sorte que le compresseur (12) du turbocompresseur à gaz d'échappement aspire l'air comburant directement depuis un filtre à air (28), un premier refroidisseur d'air de suralimentation (14) étant disposé en aval du compresseur (12) du turbocompresseur à gaz d'échappement et en amont du suralimenteur mécanique (16), et un deuxième refroidisseur d'air de suralimentation (22) étant disposé en aval du suralimenteur mécanique (16), **caractérisé en ce que** le premier refroidisseur d'air de suralimentation (14), le deuxième refroidisseur d'air de suralimentation (22), le suralimenteur mécanique (16) et un tuyau d'aspiration (34) étant disposés dans un module de refroidissement d'air de suralimentation unique, une injection directe de carburant dans les chambres de combustion du moteur à combustion interne étant prévue pour l'alimentation en carburant.

2. Moteur à combustion interne selon la revendication 1, **caractérisé en ce que** le premier et/ou le deuxième refroidisseur d'air de suralimentation (14, 22) sont réalisés sous forme de refroidisseurs d'air de suralimentation à refroidissement à eau.

3. Moteur à combustion interne selon la revendication 1 ou 2, **caractérisé en ce que** le suralimenteur mécanique (16) ainsi que le tuyau d'aspiration (34) sont disposés et réalisés de telle sorte qu'un volume dans le conduit d'air pour l'air comburant entre le suralimenteur mécanique (16) et un conduit d'admission soit inférieur à trois litres.

4. Moteur à combustion interne selon l'une ou plusieurs des revendications précédentes, **caractérisé en ce qu'**une recirculation externe des gaz d'échappement (48 ; 54) est prévue.

5. Moteur à combustion interne selon l'une ou plusieurs des revendications précédentes, **caractérisé en ce que** le turbocompresseur à gaz d'échappement est réalisé sous forme d'une partie du module de refroidissement d'air de suralimentation.

6. Moteur à combustion interne selon l'une ou plusieurs des revendications précédentes, **caractérisé en ce qu'**une dérivation (66) est associée au deuxième refroidisseur d'air de suralimentation (22).

7. Moteur à combustion interne selon l'une ou plusieurs des revendications précédentes, **caractérisé en ce que** le moteur à combustion interne est un moteur à allumage par étincelle.
